# FASCICULE DE BREVET EUROPEEN

(11) **EP 2 039 563 B1**
(45) Date de publication et mention de la délivrance du brevet: **13.04.2011**
(21) Numéro de dépôt: 08161498.4
(22) Date de dépôt: 30.07.2008
(51) Int. Cl.: B60N 2/427, B60N 2/48

(54) **Armature pour dossier de siège de véhicule automobile**
Rückenlehnerahmen für einem Kraftfahrzeugsitz.
Frame for the seat backrest of an automotive vehicle.

(30) Priorité: 18.09.2007 FR 0757644
(43) Date de publication de la demande: 25.03.2009
(73) Titulaire: Peugeot Citroën Automobiles SA, 78140 Vélizy-Villacoublay (FR)
(72) Inventeur: Lesieur, Stéphane, 77390, Ozouer le Voulgis (FR); Nignol, Christophe, 92340, Bourg la Reine (FR)

(56) Documents cités:
- EP-A- 1 077 155
- EP-A- 1 319 551
- WO-A-99/67105
- FR-A- 2 754 221
- FR-A- 2 844 489

## Description

L'invention se rapporte à un dossier articulé de siège de véhicule automobile.

L'invention se rapporte plus particulièrement à une armature articulée de dossier de siège de véhicule automobile.

Il existe des réglages sur un siège de véhicule automobile permettant de régler le haut de dossier. De tels réglages permettent d'approcher l'appui tête de la tête. Ils sont utiles par exemple pour compenser, en cas de choc du véhicule, l'effort généré par le conducteur ou les passagers en direction du dossier et pour éviter le coup du lapin en choc arrière.

De tels réglages peuvent également être intéressants pour obtenir un meilleur confort d'assise et pour un meilleur soutien des épaules.

Dans la description qui suit, les termes « haut » et « bas » et « avant », « arrière » et « côté » doivent être compris relativement au sens de roulage habituel d'un véhicule automobile. L'avant d'un dossier par exemple doit être compris comme étant la surface du dossier en contact avec le dos du conducteur ou du passager. Le haut d'un dossier est l'endroit du dossier au niveau duquel se trouvent les épaules d'un conducteur ou d'un passager.

Le dossier d'un véhicule automobile comprend généralement une armature recouverte de mousse et munie d'une coiffe.

L'armature a la forme d'un cadre qui définit le contour du dossier. L'armature comprend deux flasques qui forment deux de ses bords opposés. Les flasques sont situés sur les côtés du dossier.

Les flasques comprennent un haut de flasque et un bas de flasque qui sont articulés entre eux de façon à permettre le basculement du haut de dossier par rapport au bas de dossier. Selon l'art antérieur, L'articulation s'effectue au niveau d'un axe de rotation qui est situé au milieu de l'épaisseur du flasque.

De cette façon, le haut de dossier peut basculer lorsque les deux hauts de flasque ont un mouvement de rotation autour de l'axe.

En basculant en avant, le haut de dossier assure une meilleure sécurité et un meilleur confort au conducteur et aux passagers du véhicule.

Lorsqu'il bascule en avant, le haut de dossier comprime la mousse située entre l'armature et la coiffe générant ainsi des plis au niveau de la partie avant de la coiffe. Ces plis sont plus ou moins marqués selon la matière utilisée pour la coiffe. De tels plis donnent une impression de mauvaise qualité de la matière utilisée et de façon plus générale du véhicule automobile.

Le document FR 2 754 221 décrit un agencement de siège avec repose-tête pour véhicule dont l'articulation s'effectue au niveau d'un axe de rotation qui est situé vers l'avant du flasque. Le document EP 1 319 551 décrit également un siège dont le haut de dossier peut basculer par rapport au bas de dossier.

A cet effet, l'invention se rapporte à une armature de dossier de siège de véhicule automobile comprenant au moins un flasque comprenant un haut de flasque et un bas de flasque articulés entre eux au niveau d'un axe de rotation de façon à permettre le basculement du haut de flasque par rapport au bas de flasque l'axe de rotation étant situé vers l'avant du flasque.

Lorsque l'axe de rotation est situé vers l'avant du flasque, le haut de flasque peut basculer vers le bas de flasque sans comprimer la mousse située entre l'armature et la coiffe du siège. La mousse ne diminue pas de volume et permet donc à la coiffe de rester en contact avec la mousse durant le mouvement de basculement du haut de flasque. La coiffe étant en contact avec la mousse sur toute sa surface, elle ne génère pas de plis.

L'armature comprend des moyens de guidage et de limitation de la course du mouvement de basculement du haut de flasque par rapport au bas de flasque.

Les moyens de guidage permettent de guider les hauts de flasque en n'autorisant par exemple qu'un mouvement de basculement du haut de dossier vers l'avant. Les moyens de limitation de course permettent d'interrompre la course du haut de dossier à un endroit précis, l'objectif étant d'incliner le haut de dossier en le basculant partiellement vers le bas de dossier et non pas de replier complètement le haut de dossier sur le bas de dossier.

L'armature selon l'invention est caractérisé en ce que le haut de flasque et le bas de flasque comprennent chacun soit une lumière, soit un doigt situés vers l'arrière du flasque, la lumière étant apté à guider le doigt et à limiter sa course lors du basculument du haut de flasque.

De préférence le haut de flasque comprend la lumière et le bas de flasque le doigt.

Les caractéristiques complémentaires énumérées ci-après font l'objet des revendications dépendantes.

De préférence, l'axe de rotation est situé dans le premier quart de l'épaisseur du flasque à partir de la surface avant du flasque.

Si l'axe de rotation est situé dans cette zone particulière, le maintien en contact de la mousse avec la surface de la coiffe s'en trouve amélioré.

De préférence, l'axe de rotation est situé au voisinage de la surface avant du flasque.

Lorsque l'axe de rotation est situé au voisinage de la surface avant du flasque, le maintien en contact de la mousse avec la surface de la coiffe est optimisé. Au fur et à mesure que l'axe de rotation se décale vers l'avant du flasque, la coiffe présente de moins en moins de plis.

La structure de l'armature permet d'améliorer sa rigidité. En effet, un flasque comprend deux points d'ancrage : un premier point d'ancrage se trouve au niveau de l'axe de rotation et un deuxième point d'ancrage se trouve au niveau de la lumière coopérant avec le doigt. En outre, le fait que le guidage du doigt dans la lumière autorise une course du haut de dossier par rapport au bas de dossier permet de compenser des efforts et d'améliorer encore la rigidité de l'armature, notamment en cas de choc du véhicule automobile.

La structure de l'armature peut être réalisée selon différents modes de réalisation. Deux de ces modes de réalisation sont particulièrement adaptés.

Selon le premier mode de réalisation, le doigt est fixe et la lumière est mobile. Le haut de flasque est alors guidé le long du doigt jusqu'à venir en butée sur la lumière.

Selon un deuxième mode de réalisation, le bas de flasque comprend une lumière située vers l'arrière du flasque et le haut de flasque comprend un doigt vers l'arrière du flasque, la lumière étant apte à guider le doigt et à limiter sa course lors du basculement du haut de flasque.

Selon le deuxième mode de réalisation, le doigt est mobile et la lumière est fixe. Le haut de flasque est alors guidé le long de la lumière jusqu'à venir en butée sur le doigt. Cette structure est un autre mode de réalisation de l'invention qui permet également d'améliorer la rigidité de la structure.

Les moyens de guidage et de limitation de la course du mouvement de basculement permettent préférentiellement le basculement de la partie haute de l'armature d'un angle compris entre 20 et 30 degrés.

Le basculement est uniquement partiel : le repliement complet du haut de dossier sur le bas de dossier n'est pas autorisé. En outre, le basculement du haut de dossier ne doit pas être trop important car il risquerait plutôt de blesser le passager et/ou le conducteur ou d'être inconfortable. Le basculement du haut de dossier ne peut pas non plus être trop faible car il risquerait d'être inefficace. Un basculement compris entre 20 et 30 degrés est particulièrement adapté pour être efficace sans gêner le passager et/ou le conducteur.

L'invention se rapporte également à un siège de véhicule automobile comprenant un dossier comprenant un bas de dossier et un haut de dossier articulés entre eux de façon à permettre le basculement du haut du dossier par rapport au bas de dossier l'axe de rotation étant situé vers l'avant du dossier.

Le siège selon l'invention étant caractérisé en ce que :
le bas de dossier et le haut de dossier étant recouverts chacun par une partie de la coiffe, lesdites parties de coiffe sont assemblées par une couture dont le tracé est décalé vers le bas du dossier par rapport à l'axe de rotation.
les caractéristiques complémentaires énumérées ci-après font l'objet des revendications dépendantes.

L'armature selon l'invention est caractérisée en ce que le haut de flasque et le bas de flasque comprennent chacun soit une lumière, soit un doigt situés vers l'arrière du flasque, la lumière étant apte à guider le doigt et à limiter sa course lors du basculement du haut de flasque.

L'axe de rotation situé vers l'avant permet de faire basculer le haut de dossier sans que la mousse ne soit comprimée. De cette façon, la coiffe qui recouvre la mousse reste en permanence en contact avec la mousse lors du basculement, ce qui évite la formation de plis au niveau de la coiffe.

De préférence, l'axe de rotation est situé dans le premier quart de l'épaisseur du dossier à partir de la surface avant du dossier.

Lorsque l'axe de rotation est positionné dans le premier quart de l'épaisseur du dossier, le maintien en contact de la mousse avec la coiffe s'en trouve amélioré.

De préférence, l'axe de rotation est situé au voisinage de la surface avant du dossier.

Lorsque l'axe de rotation se trouve au voisinage de la surface avant du dossier, le maintien en contact de la mousse avec la coiffe est optimisé. Au fur et à mesure que l'axe de rotation se décale vers l'avant du flasque, la coiffe présente de moins en moins de plis.

Le dossier comprend avantageusement des moyens de guidage et de limitation de la course du mouvement de basculement du haut de dossier par rapport au bas de dossier.

Les moyens de guidage permettent de guider le haut de dossier en n'autorisant par exemple qu'un mouvement de basculement vers l'avant. Les moyens de limitation de course permettent en outre d'interrompre la course du haut de dossier à un endroit précis, l'objectif étant d'incliner le haut de dossier en le basculant partiellement vers le bas de dossier et non pas de replier complètement le haut de dossier sur le bas de dossier.

Lorsque le haut de dossier bascule, la couture de la coiffe vient se loger en-dessous de l'axe de rotation. Ceci permet de bien tendre la coiffe sur la mousse.

Ledit tracé est avantageusement décalé d'environ un centimètre.

Cette distance de décalage améliore la tension de la coiffe donne ainsi un aspect lisse à la coiffe.

D'autres particularités et avantages ressortiront clairement de la description qui en est faite ci-après, à titre indicatif et nullement limitatif, en référence aux dessins annexés, dans lesquels :
- la figure 1 représente la partie supérieure d'un dossier de siège de véhicule automobile vue de côté ;
- la figure 2 représente le haut d'une armature de dossier vue de côté ;
- la figure 3 représente la partie supérieure d'une armature de dossier vu de l'avant.

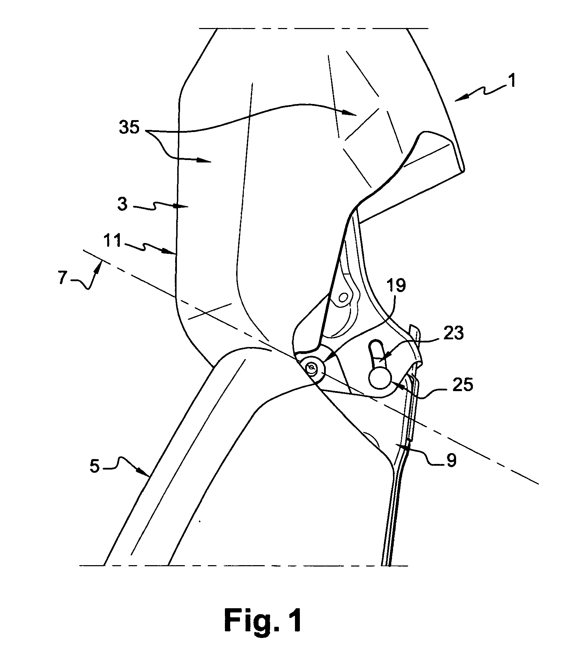

Le dossier 1 de siège de véhicule automobile comprend un haut de dossier 3 et un bas de dossier 5, conformément à la figure 1. Ceux-ci sont articulés entre eux au niveau d'un axe de rotation 7 de façon à permettre le basculement du haut de dossier par rapport au bas de dossier.

Le dossier 1 comporte également une armature 9, au moins une couche de mousse recouvrant l'armature, non visible sur la figure 1, et une coiffe 11 qui recouvre complètement la mousse.

La coiffe 11 peut être réalisée par exemple en tissu ou en cuir.

L'armature 9 peut avoir une forme de cadre qui forme le pourtour du dossier 1. L'armature 9 comprend notamment deux flasques 13 qui sont situés sur deux de ses bords opposés, chacun se trouvant sur un côté du dossier 1.

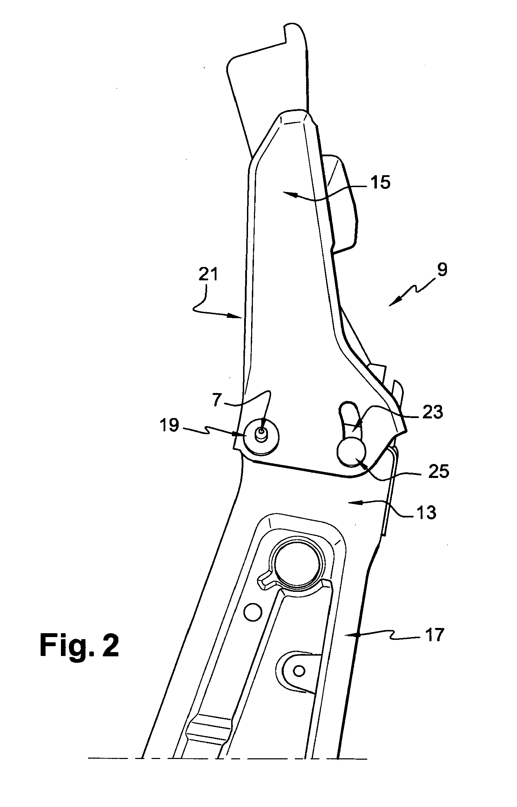

Un flasque 13 est visible sur la figure 2. Chaque flasque 13 comprend un haut de flasque 15 et un bas de flasque 17. Le haut de flasque et le bas de flasque sont articulés entre eux au niveau de l'axe de rotation 7.

Le haut de flasque 15 comprend un orifice situé vers l'avant de sa base.

Le bas de flasque 17 comprend également un orifice qui situé vers l'avant à son extrémité haute.

Le bas de flasque 17 et le haut de flasque 15 sont assemblés par une pièce 19 qui est introduite dans les deux orifices. Ils sont mobiles en rotation l'un par rapport à l'autre permettant ainsi d'assurer le basculement du haut de flasque 15 par rapport au bas de flasque 17.

L'axe de rotation 7 se situe vers l'avant du flasque 13. L'axe 7 est de préférence situé au voisinage de la surface avant 21 du flasque.

Chaque flasque 13 peut également comprendre des moyens de guidage et d'arrêt de fin de course du haut de flasque lors du basculement de celui-ci.

Ces moyens comprennent un ensemble comportant une lumière 23 et un doigt 25 qui coopèrent ensemble pour guider et arrêter le haut de flasque 15 en bout de course.

Selon un premier mode de réalisation illustré sur les figures, le haut de flasque 15 comprend une lumière 23 et le bas de flasque 17 comprend un doigt 25.

La lumière 23 se trouve à l'arrière du haut de flasque 15 et sensiblement à la même hauteur que l'axe de rotation 7. Le bas de flasque 17 comprend un doigt 25 situé vers son arrière et apte à coopérer avec la lumière 23. Le doigt 25 est guidé dans la lumière 23 lors du basculement du haut de flasque 9. Lorsque le basculement arrive en fin de course, le rebord de la lumière 23 sert de butée au doigt 25.

Selon un deuxième mode de réalisation (non illustré), le bas de flasque 17 comprend une lumière 23 située vers son arrière sensiblement à la même hauteur que l'axe de rotation 7. Le haut de flasque 15 comprend un doigt 25 situé vers son arrière. Le doigt 25 est guidé dans la lumière 23 lors du basculement. Lorsque le basculement doit s'arrêter, la lumière 23 vient en butée sur le doigt 25.

Selon un mode de réalisation illustré, la lumière 23 a une forme allongée qui permet à la fois de guider le doigt 25 le long de ses bords allongés et d'interrompre sa cours au niveau de ses bords courts. La lumière 23 a par ailleurs une longueur adaptée pour pouvoir faire basculer le haut de flasque 15 vers l'avant d'un angle qui peut être compris entre 20 et 30 degrés.

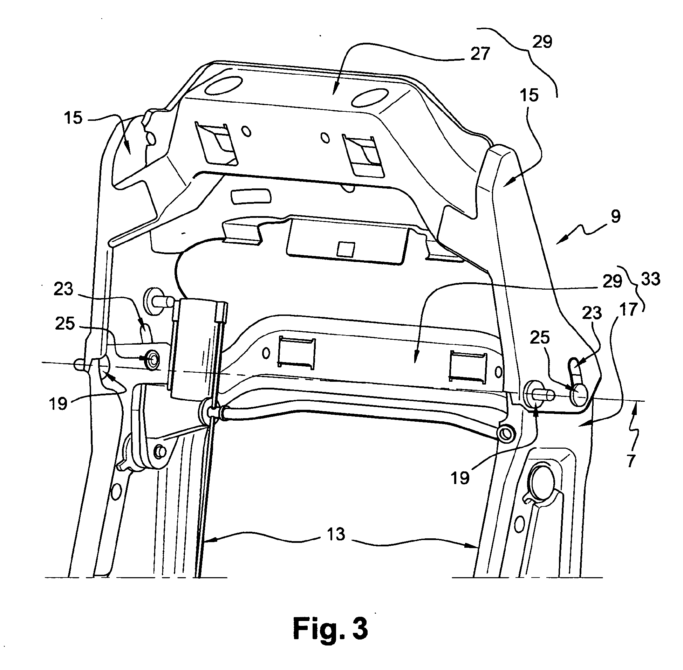

La figure 3 montre la partie haute de l'armature 9 qui comprend deux flasques 13. Ceux-ci sont fixés entre eux. Les deux hauts de flasque 15 sont reliés solidairement entre eux par une première barre 27 par leurs extrémités hautes.

De la même façon, les deux bas de flasques sont reliés entre eux par une deuxième barre 29 par leurs extrémités hautes. Ces deux barres permettent d'améliorer la rigidité de la structure de l'armature 9. Elles permettent également de solidariser les deux hauts de flasque 15 entre eux ainsi que les deux bas de flasque 17. De cette façon, lorsqu'un haut de flasque 15 de l'armature 9 se déplace, l'autre haut de flasque se déplace également.

Les deux hauts de flasque 15 ainsi que la barre de liaison 27 constituent le haut de l'armature 31. Le mouvement du haut de l'armature 31 autour de l'axe de rotation 7 vers l'avant provoque ainsi le basculement du haut de dossier 3 par rapport au bas de dossier 5. Les deux bas de flasque 17 ainsi que la barre 29 qui les relie constituent le bas de l'armature 33.

Le haut de l'armature 31 est par conséquent articulé par rapport au bas de l'armature 33 au niveau de l'axe de rotation 7.

L'axe de rotation 7 est également situé au niveau de l'avant du dossier 1 c'est-à-dire que l'axe de rotation 7 se trouve de préférence au voisinage de la surface avant du dossier 1. Pour cela, le dossier peut comporter une épaisseur de mousse un peu plus faible qu'aux autres endroits.

La position de l'axe de rotation 7 en avant du dossier 1 permet de diminuer, voire de supprimer les plis générés par la coiffe 11 lors du basculement du haut de dossier 3.

La figure 1 représente une portion de dossier 1 recouvert d'une coiffe 11. La coiffe 11 est assemblée sur la mousse du siège par des jointures 35 qui peuvent être réalisées par couture, conformément à la figure 3, ou encore par soudure, par collage ou par tout autre moyen qui permettrait d'assembler deux coiffes 11.

Une des coutures, qui n'est pas représentée sur la figure 3, fait la jonction entre la coiffe 11 du haut de dossier 3 et la coiffe 11 du bas de dossier 5. Elle est sensiblement parallèle à l'axe de rotation 7. Elle ne se trouve pas en face de l'axe de rotation 7 mais se trouve décalée vers le bas. Elle est de préférence décalée d'une distance pouvant aller de 0,5 à 2 cm. Ce décalage permet à la couture de se glisser sous l'axe de rotation 7 lorsque le haut du siège est basculé. De cette façon, la surface de la coiffe 11 reste lisse lorsque le haut de dossier 3 se trouve incliné vers l'avant après basculement.

Nous allons maintenant décrire la façon dont le haut de dossier bascule suivant le mode de réalisation illustré sur les figures.

L'articulation du dossier se fait de la façon suivante : le haut de l'armature 31 bascule vers l'avant par rotation autour de l'axe 7. Les doigts 25 de chaque bas de flasque sont en même temps guidés dans les lumières 23 de chaque haut de flasque 15. Le haut de l'armature 31 finit sa course lorsqu'il arrive en butée sur le rebord de la lumière 23.

## Revendications

1. Armature de dossier de siège de véhicule automobile comprenant au moins un flasque (13) comprenant un haut de flasque (15) et un bas de flasque (17) articulés entre eux au niveau d'un axe de rotation (7) de façon à permettre le basculement du haut de flasque par rapport au bas de flasque, l'axe de rotation étant situé vers l'avant du flasque et l'armature (9) comprenant des moyens de guidage et de limitation de la course du mouvement de basculement du haut de flasque par rapport au bas de flasque **caractérisé en ce que** le haut de flasque (15) et le bas de flasque (17) comprennent chacun soit une lumière (23), soit un doigt (25) situés vers l'arrière du flasque, la lumière étant apte à guider le doigt et à limiter sa course lors du basculement.

2. Armature de dossier de siège selon la revendication 1 **caractérisée en ce que** l'axe de rotation (7) est situé dans le premier quart de l'épaisseur du flasque (13) à partir de la surface avant du flasque.

3. Armature de dossier de siège selon la revendication 2 **caractérisé en ce que** l'axe de rotation (7) est situé au voisinage de la surface avant du flasque (13).

4. Armature de dossier de siège selon l'une des revendications précédentes **caractérisée en ce que** les moyens de guidage et de limitation de la course du mouvement de basculement permettent le basculement de la partie haute de l'armature (31) d'un angle compris entre 20 et 30 degrés.

5. Siège de véhicule automobile comprenant un dossier (1) comprenant un bas de dossier (5) et un haut de dossier (3) articulés entre eux de façon à permettre le basculement du haut du dossier (3) par rapport au bas de dossier (5), l'axe de rotation (7) étant situé vers l'avant du dossier (1), **caractérisé en ce que** le bas de dossier (5) et le haut de dossier (3) étant recouverts chacun par une partie de la coiffe, lesdites parties de coiffe sont assemblées par une couture dont le tracé est décalé vers le bas du dossier (5) par rapport à l'axe de rotation (7).

6. Siège de véhicule automobile selon la revendication 5, **caractérisé en ce que** l'axe de rotation (7) est situé dans le premier quart de l'épaisseur du dossier (1) à partir de la surface avant du dossier.

7. Siège de véhicule automobile selon la revendication 6, **caractérisé en ce que** l'axe de rotation (7) est situé au voisinage de la surface avant du dossier (1).

8. Siège de véhicule automobile selon l'une quelconque des revendications 5 à 7, **caractérisé en ce que** le dossier (1) comprend des moyens de guidage et de limitation de la course du mouvement de basculement du haut de flasque (15) par rapport au bas de flasque (17).

9. Siège de véhicule automobile selon l'une quelconque des revendications 5 à 8, **caractérisé en ce que** ledit tracé est décalé d'environ un centimètre.

## Claims

1. Frame for the seat backrest of a motor vehicle comprising at least one flange (13) comprising a flange top (15) and a flange bottom (17) articulated with each other at the level of a rotation axis (7) so as to permit the tilting of the flange top with respect to the flange bottom, the rotation axis being situated towards the front of the flange and the frame (9) comprising means for guiding and for limitation of the course of the tilting movement of the flange top with respect to the flange bottom, **characterized in that** the flange top (15) and the flange bottom (17) each comprise either an opening (23), or a finger (25), situated towards the rear of the flange, the opening being able to guide the finger and to limit its course on tilting.

2. Frame for the seat backrest according to Claim 1, **characterized in that** the rotation axis (7) is situated in the first quarter of the thickness of the flange (13) from the front surface of the flange.

3. Frame for the seat backrest according to Claim 2, **characterized in that** the rotation axis (7) is situated in the vicinity of the front surface of the flange (13).

4. Frame for the seat backrest according to one of the preceding claims, **characterized in that** the means for guiding and for limiting the course of the tilting movement permit the tilting of the upper part of the frame (31) by an angle comprised between 20 and 30 degrees.

5. Motor vehicle seat comprising a backrest (1) comprising a backrest bottom (5) and a backrest top (3) articulated with each other so as to permit the tilting of the backrest top (3) with respect to the backrest bottom (5), the rotation axis (7) being situated towards the front of the backrest (1), **characterized in that**, with the backrest bottom (5) and the backrest top (3) each being covered by a part of the cover, the said cover parts are assembled by a seam, the alignment of which is staggered towards the bottom (5) of the backrest with respect to the rotation axis (7).

6. Motor vehicle seat according to Claim 5, **characterized in that** the rotation axis (7) is situated in the first quarter of the thickness of the backrest (1) from the front surface of the backrest.

7. Motor vehicle seat according to Claim 6, **characterized in that** the rotation axis (7) is situated in the vicinity of the front surface of the backrest (1).

8. Motor vehicle seat according to any one of Claims 5 to 7, **characterized in that** the backrest (1) comprises means for guiding and for limitation of the course of the tilting movement of the flange top (15) with respect to the flange bottom (17).

9. Motor vehicle seat according to any one of Claims 5 to 8, **characterized in that** the said alignment is staggered by approximately one centimetre.

## Patentansprüche

1. Armierung einer Sitzrückenlehne für Kraftfahrzeug, die mindestens einen Flansch (13) aufweist, der einen Flanschoberteil (15) und einen Flanschunterteil (17) aufweist, die untereinander auf dem Niveau einer Rotationsachse (7) derart angelenkt sind, dass das Kippen des Flanschoberteils in Bezug zu dem Flanschunterteil erlaubt wird, wobei sich die Rotationsachse an der Vorderseite des Flanschs befindet und die Armierung (9) Mittel zum Führen und Begrenzen des Hubs der Kippbewegung der Flanschoberteils in Bezug zu dem Flanschunterteil aufweist, **dadurch gekennzeichnet, dass** der Flanschoberteil (15) und der Flanschunterteil (17) jeweils entweder eine Längsöffnung (23) oder einen Finger (25) aufweisen, die sich an der Rückseite des Flanschs befinden, wobei das Langloch den Finger führen und seinen Hub beim Kippen einschränken kann.

2. Armierung einer Sitzrückenlehne nach Anspruch 1, **dadurch gekennzeichnet, dass** die Rotationsachse (7) in dem ersten Viertel der Stärke des Flanschs (13) ausgehend von der vorderen Oberfläche des Flanschs liegt.

3. Armierung einer Sitzrückenlehne nach Anspruch 2, **dadurch gekennzeichnet, dass** die Rotationsachse (7) in der Nähe der vorderen Oberfläche des Flanschs (13) liegt.

4. Armierung einer Sitzrückenlehne nach einem der vorhergehenden Ansprüche, **dadurch gekennzeichnet, dass** die Führungs- und Begrenzungsmittel des Hubs der Kippbewegung das Kippen des oberen Teils der Armierung (31) um einen Winkel, der zwischen 20 und 30 Grad liegt, erlauben.

5. Kraftfahrzeugsitz, der eine Rückenlehne (1) aufweist, die einen Rückenlehnenunterteil (5) und einen Rückenlehnenoberteil (3) aufweist, die untereinander derart angelenkt sind, dass sie das Kippen des Rückenlehnenoberteils (3) in Bezug zu dem Rückenlehnenunterteil (5) erlauben, wobei die Rotationsachse (7) an der Vorderseite der Rückenlehne (1) liegt, **dadurch gekennzeichnet, dass** der Rückenlehnenunterteil (5) und der Rückenlehnenoberteil (3) jeweils von einem Teil der Haube abgedeckt sind, wobei die Haubenteile durch eine Naht zusammengefügt sind, deren Verlauf zum Rückenlehnenunterteil (5) in Bezug zu der Rotationsachse (7) versetzt ist.

6. Kraftfahrzeugsitz nach Anspruch 5, **dadurch gekennzeichnet, dass** die Rotationsachse (7) in dem ersten Viertel der Stärke der Rückenlehne (1) ausgehend von der vorderen Oberfläche der Rückenlehne liegt.

7. Kraftfahrzeugsitz nach Anspruch 6, **dadurch gekennzeichnet, dass** die Rotationsachse (7) in der Nähe der vorderen Oberfläche der Rückenlehne (1) liegt.

8. Kraftfahrzeugsitz nach einem der Ansprüche 5 bis 7, **dadurch gekennzeichnet, dass** die Rückenlehne (1) Führungs- und Begrenzungsmittel des Hubs der Kippbewegung des Flanschoberteils (15) in Bezug zu dem Flanschunterteil (17) aufweist.

9. Kraftfahrzeugsitz nach einem der Ansprüche 5 bis 8, **dadurch gekennzeichnet, dass** der Verlauf um etwa einen Zentimeter versetzt ist.
